(19) Europäisches Patentamt
European Patent Office
Office européen des brevets

(11) **EP 4 311 673 A1**

(12) **EUROPÄISCHE PATENTANMELDUNG**

(43) Veröffentlichungstag:
**31.01.2024   Patentblatt 2024/05**

(21) Anmeldenummer: **22187795.4**

(22) Anmeldetag: **29.07.2022**

(51) Internationale Patentklassifikation (IPC):
**B41F 33/00** (2006.01)          **G01J 3/46** (2006.01)
**H04N 1/60** (2006.01)          **B41F 9/02** (2006.01)
**B41F 9/06** (2006.01)

(52) Gemeinsame Patentklassifikation (CPC):
**B41F 33/0036; B41F 9/021; B41F 9/063;**
**G01J 3/50; H04N 1/6033; H04N 1/6036;**
B41P 2227/70; B41P 2233/51; G01J 2003/503

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Improve Process Analytics and Control
GmbH
9524 Villach (AT)**

(72) Erfinder:
• **BERGMANN, Bernd
30900 Wedemark (DE)**
• **SALLINGER, Christian
9500 Villach (AT)**

(74) Vertreter: **Cohausz & Florack
Patent- & Rechtsanwälte
Partnerschaftsgesellschaft mbB
Bleichstraße 14
40211 Düsseldorf (DE)**

(54) **VERFAHREN ZUR PRÜFUNG DES FARBÜBERTRAGUNGSVERHALTENS VON FORMZYLINDERN**

(57)     Die Erfindung betrifft ein Verfahren zur Prüfung des Farbübertragungsverhaltens von Formzylindern, bei dem für einen unbedruckten Abschnitt des Substrat mit einem ortsaufgelösten spektralen Messsystem an einer Vielzahl von Messpunkten eine spektral aufgelöste Referenzreflektanz gemessen wird, bei dem für einen vollbedruckten Abschnitt des Substrates eine spektral aufgelöste Volltonreflektanz gemessen wird, bei dem für die Messpunkte aus dem vollbedruckten Abschnitt aus der spektralen Verteilung der gemessenen Volltonreflektanz, der gemessenen Referenzreflektanz und einer die Druckfarbe repräsentierenden spektralen Gewichtsfunktion eine Volltonfarbdichte für die Druckfarbe berechnet wird, bei dem für zumindest einen Abschnitt des gedruckten Farbauszugs die spektral aufgelöste Reflektanz mit dem ortsaufgelösten spektralen Messsystem an einer Vielzahl von Messpunkten gemessen wird, bei dem für jeden Messpunkt aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet wird, bei dem aus den digitalen Zylinderdaten mindestens ein Farbdichteabschnitt des zu druckenden Farbauszugs mit innerhalb eines prozentualen Bereiches gleicher Farbdichte ermittelt wird, bei dem die gemessenen Farbdichten zu allen Messpunkten innerhalb des mindestens einen ermittelten Farbdichteabschnitts des Farbauszugs zusammengefasst werden und eine mittlere Farbdichte berechnet wird, bei dem die mittlere Farbdichte für die Farbdichteabschnitte des gedruckten Farbauszugs mit der Volltonfarbdichte verglichen und die Farbtonstufe als prozentualer Wert berechnet wird.

Fig.7

**Beschreibung**

Die Erfindung betrifft ein Verfahren zur Prüfung des Farbübertragungsverhaltens von Formzylindern, insbesondere für Rotationstiefdruckverfahren.

Das relevante technische Gebiet liegt im Bereich des Rotationstiefdruckes und der Erzeugung und Qualitätskontrolle des Herstellens von Formzylindern für den Rotationstiefdruck durch Gravur der Oberflächen der Formzylinder. Beim Rotationstiefdrucken werden die Formzylinder mit jeweils einer Druckfarbe beaufschlagt und mit dem zu bedruckenden Substrat in Anlage gebracht. Mittels einer Druckwalze, die auf der anderen Seite des Substrates, also dem Formzylinder gegenüberliegend angeordnet ist, wird ein Druck zum Übertragen der Farbe aus der Gravur auf das Substrat erzeugt. Die Gravur besteht dabei bevorzugt aus Vertiefungen in Form von Näpfchen oder Rillen, die Formen der einzelnen Vertiefungen ist aber grundsätzlich frei wählbar.

Im Rotationstiefdruckverfahren werden ausgehend von einer digitalen Vorlage mit einem zu produzierenden Design oder Dekor Zylinderdaten zur Herstellung der Gravur erzeugt, so dass die gravierten Formzylinder im Rotationstiefdruckverfahren analog das Design analog mit in der Regel vier Druckfarben drucken können.

Bevor also ein Design oder ein Dekor mit einer Rotationstiefdruckmaschine zum ersten Mal gedruckt werden kann, sind mehrere Prozessschritte zu durchlaufen, die im Folgenden stichwortartig aufgezählt werden: Digitale Bilddaten werden für eine zu druckende Vorlage erzeugt, beispielsweise mittels eines Photos oder Scans der Vorlage (z.B. Stück Holz, Stein, etc.).

Aus den Bilddaten wird eine Bilddatei erzeugt, mit der sich das zu druckende Design am Monitor darstellen lässt oder auch auf einem Proof-Drucker (CMYK, C-Cyan, M-Magenta, Y-Yellow, K-Key (schwarz)) ausgeben lässt.

Für jede Druckfarbe werden aus der Bilddatei für den zugeordneten Formzylinder digitale Zylinderdaten in Form von Graustufenbildern erzeugt. In der Regel sind vier Formzylinder für vier Druckfarben vorgesehen. Die Graustufenbilder sind bevorzugt als 8-bit Graustufenbilder berechnet. Die Formzylinder wirken mit einem Druckzylinder zusammen, um ein Substrat zu bedrucken.

Für mindestens eine der Druckfarben, vorzugsweise für alle Druckfarben wird der Formzylinder unter Anwendung einer vorgegebenen Gravurkurve und anhand der digitalen Zylinderdaten graviert. Dabei bestimmt die Gravurkurve, wie die Intensität, also der Sollwert der Tonstufe, aus dem Graustufenbild der Zylinderdaten in die tatsächlich gedruckte Tonstufe gemessen als Farbdichte übersetzt wird. Der Formzylinder stellt daher eine tiefen- und flächenvariable Druckform dar.

Mit der vorzugsweise aus den vier Formzylindern bestehenden Druckform erfolgt dann der erste Andruck. Beispielsweise werden beim 4-Farben-Tiefdruck die jeweiligen Farbauszüge übereinander gedruckt und bilden durch subtraktive Farbmischung den finalen Farbeindruck des zu produzierenden Designs oder Dekors.

Mit einer Farbkontrolle bzw. einem Farbmanagement soll beim Einrichten des Druckvorgangs erreicht werden, dass eine Vorlage, die mit einem Eingabegerät wie beispielsweise einer Kamera erfasst wurde und zu den Bilddaten umgewandelt worden ist, an einem beliebigen Ausgabegerät möglichst ähnlich wiedergegeben wird.

Problematisch ist dabei die richtige Auswahl der zu verwendenden Druckfarben mit ihren spezifischen Mischungen aus Pigmenten und deren Konzentrationen. Denn für verschiedene Druckfarben, die für einen Tonwert von 100 % die gleiche Farbwirkung erzielen, können die Farbwirkungen für Tonwertstufen kleiner als 100 % unterschiedlich sein.

Daher müssen bei einem neuen Design oder Dekor nicht nur ausgehend von dem digitalen Bild ein analoges Raster für die Druckwalzen erzeugt werden, sondern auch die bestmöglichen Druckfarben bestimmt werden..

Entspricht der Farbeindruck daher nach dem ersten Andruck noch nicht den Erwartungen, muss mindestens eine Druckfarbe nachjustiert und beispielsweise ihrer Pigmentzusammensetzung angepasst werden. In der Regel sind viele, beispielsweise 12 - 14 Farbanpassungsschritte notwendig, bis der farbliche Gesamteindruck eines neuen Designs oder Dekors stimmt und eine Freigabe kann dann erst erfolgen.

Die Anpassung kann manuell und auf der Basis eines guten Fachwissens von einer Druckerperson geleistet werden. Mittlerweile stehen aber auch digitale Auswertemöglichkeiten zur Verfügung.

Im Stand der Technik ist eine spezielle Farbmanagement-Software AVACADCAM der Firma AVA CAD/CAM Group Ltd bekannt, mit der sich der oben erwähnte Anpassungsprozess auf ca. 4 - 6 Farbangleichungsschritte reduzieren lässt. Dabei wird ein sogenanntes Overprint-Model verwendet, mit dem der Rotationstiefdruck vorab anhand spektraler Daten von zur Verfügung stehenden Druckfarben simuliert werden kann.

Der Designer wählt dazu die Druckfarben für die Farbauszüge aus einer tonalen Farbdatenbank aus. Dabei weist jede Druckfarbe eine bestimmte Zusammensetzung von Pigmenten in einem Trägermedium oder in einem Lösungsmedium auf. Für jede für den Druck verwendbare Farbe aus dieser Datenbank ist der Farbverlauf über die Tonwertstufen bekannt.

Unter dem Farbverlauf werden die Spektren für eine Mehrzahl von Tonwerten verstanden. Tonwerte sind dabei die prozentualen anteiligen Werte ausgehend von der Volltonfarbe mit 100%-igem Druck. So kann beispielsweise in 10%-Schritten ausgehend von 100% (Volltonfarbe) bis hin zu 10 % unter Berücksichtigung der Substratfarbe bei 0 % Bedruckung die spektrale Verteilung der Farbe hinterlegt sein.

Die tonale Farbdatenbank ist in dem Verfahren der Farbmanagement-Software AVACADCAM von großer Bedeutung, da die Simulation nur dann gut funktioniert, wenn zuvor viele Druckfarben eingemessen wurden.

Zum Einmessen der Tonwertstufen und der spektralen Eigenschaften einer Druckfarbe werden spezielle Formzylinder benutzt, die hinreichend große homogene Farbflächen, beispielsweise in 10% Stufen und bevorzugt in sogenannten Farbkeilen aufweisen. Die angemischte Druckfarbe wird dann in einer Labordruckanlage mit dem speziellen Formzylinder auf das spezifische Substrat, also beispielsweise auf das vorgegebene Papier gedruckt. Jedes Farbfeld wird anschließend von Hand mit einem Punktmessgerät spektral ausgemessen und die Messwerte bzw. die Spektren werden in der tonalen Farbdatenbank hinterlegt. Dieser Vorgang ist insgesamt zeit- und kostenintensiv und ist daher wenig flexibel, wenn andere Druckfarben eingesetzt werden sollen, als in der tonalen Farbdatenbank gespeichert worden sind.

Bei dem beschriebenen Verfahren wird die sogenannte Spektraldensitometrie angewendet. Densitometrie ist grundsätzlich eine Methode zur Kontrolle des Druckprozesses bezüglich Volltondichte und Tonwerten. Sie funktioniert zuverlässig für Schwarz-Weiß-Drucke und für Drucke mit den Druckfarben Cyan (Blau), Magenta, Yellow (Gelb) und Key (Schwarz).

Bei der Auflichtdensitometrie wird die zu messende Druckfarbe von einer Lichtquelle beleuchtet. Der Lichtstrahl durchdringt die durchscheinende (lasierende) Farbschicht und wird dabei abgeschwächt. Der verbleibende Rest des Lichts wird von der Papierunterlage gestreut. Von diesem Streulicht durchläuft ein Teil nochmals die Farbschicht und wird weiter abgeschwächt. Der jetzt noch verbleibende Rest erreicht schließlich das Messgerät, welches das Licht in elektrische Energie umwandelt. Das Ergebnis der Auflichtdensitometrie wird in Dichteeinheiten angegeben.

Die Farbdichte einer Druckfarbe ist in erster Linie abhängig von der Pigmentart, ihrer Konzentration und der Farbschichtdicke. Für eine gegebene Druckfarbe ist die Farbdichte ein Maß für die Schichtdicke.

Densitometer zeigen als Messergebnis die Farbdichte D an. Sie ist das logarithmische Verhältnis aus der Lichtreflexion durch ein Vergleichsweiß und der Lichtreflexion der Farbschicht. Der Farbdichtewert errechnet sich nach der Formel $D = \log 1/\beta$. Der Reflexionsgrad $\beta$ stellt dabei das Verhältnis LeP / LeW dar. Dabei sind LeP die Reflexion der gemessenen Druckfarbe und LeW die Reflexion des Referenzweißes. Somit kann D auch als log LeW/LeP dargestellt werden.

Der Reflexionsgrad ß gibt also das Verhältnis zwischen den Lichtreflexionen einer zu messenden Probe (Druckfarbe) und einem Weiß (Referenzwert) an. Der Reflexionsgrad $\beta$ wird häufig auch als Reflexionsfaktor R bezeichnet.

Beim klassischen Densitometer werden mit Hilfe von Farbfiltern die einzelnen Druckfarben Cyan, Magenta und Yellow vermessen, so dass für jede der Druckfarben ein eigener Messvorgang notwendig ist.

Die Spektraldensitometrie bedient sich des Messprinzips der Erfassung der spektralen Reflektanz, aus dem sich alle anderen farbmetrischen und densitometrischen Größen berechnen lassen. Die Reflektanz, auch der Reflexionsgrad genannt, ist das Verhältnis zwischen reflektierter und einfallender Intensität des Lichtes.

Der Sensor des Spektraldensitometers ist für große Teile, insbesondere für den kompletten sichtbaren Bereich des elektromagnetischen Spektrums, also alle Wellenlängen des sichtbaren Lichts empfindlich. Der Empfindlichkeitsbereich beginnt etwa bei ungefähr 380 nm im Violett und reicht über die Farbnuancen Blaugrün, Grün und Gelb bis zum Rot bei ungefähr 730 nm.

Die spektralen Reflektanzwerte werden für alle Wellenlängenabschnitte (Banden) gleichzeitig mittels eines Polychromators oder auch Spektralmesskopf gemessen. Die Banden decken jeweils Wellenlängenbereiche mit einer vorgegebenen Breite ab. Beispielsweise sind Polychromatoren bekannt, die Banden mit einer Breite zwischen 10 und 50 nm auflösen können. Das Auffächern des Lichtes erfolgt dabei durch ein Beugungsgitter, ein Prisma oder durch viele Schmalbandfilter. Jedenfalls wird der gemessene Lichtstrom in seine spektralen Anteile aufgeteilt, deren Signalstärken gemessen und in ihrer Gesamtheit als Spektralwertkurve ausgegeben werden.

Bei der spektralen Messung werden also im Unterschied zu klassischen Densitometern die spektralen Farbinformationen bei der Berechnung der Farbschichten herangezogen. Zudem können aus den spektralen Messwerten die Farbdichten für Cyan, Magenta, Yellow und auch für anderen Druckfarben bestimmt werden, ohne dass separate Messungen mit unterschiedlichen Farbfiltern notwendig sind.

Bei den Spektraldensitometern tasten photoempfindliche Sensoren zur Bestimmung des spektralen Reflektanzwerte bei der Bestimmung der densitometrischen Größen den gesamten sichtbaren Bereich des elektromagnetischen Spektrums ab. Dabei können sowohl physikalische Filter in den Strahlengang eingeschwenkt als auch virtuelle, das heißt mathematisch simulierte Filter gesetzt werden. Zusätzlich verlangt die standardkonforme Dichtemessung die Verwendung eines Polarisationsfilters, der die Glanzunterschiede zwischen noch nassen und bereits getrockneten Druckfarbenschichten unterdrückt. Auf diese Weise werden unabhängig von der Zeitnähe zum Druckvorgang die Messungen vergleichbar gemacht.

Die Anwendung von mathematisch simulierten Filtern ist in den Normen ISO 13655 Kapitel 5 sowie ISO 5.3 Kapitel 4.5.2 zusammen mit Annex B definiert. Aus der gemessenen Reflektanz und durch Faltung mit der Filterfunktion für verschiedene Grundfarben wie Cyan, Magenta und Yellow, ergeben sich Werte der Farbdichten für die Tristimulus-Werte X, Y, und Z, bevorzugt im CIE-Normsystem.

In der Praxis werden Handmessgeräte für Einzelmessung, handgeführte Scangeräte zum manuellen Erfassen von in einer Linie angeordneten Messfeldern und elektromotorisch angetriebene Scanmessgeräte als Scan-Spektraldensitometer eingesetzt. Zudem sind Inline-Messsysteme bekannt, die in einem Drucksystem angeordnet sind und nacheinander gedruckte Messfelder vermessen. Diese Geräte haben dabei die Gemeinsamkeit, dass jeweils an einem Ort auf dem zu vermessenden Druckbild das Remissionsspektrum mit einer Optik und einer Sensoranordnung spektral erfasst wird. Die Abmessungen der erfassten, bevorzugt runden Fläche liegen in der Größenordnung von 1 bis 10 mm.

Die auf dem Substrat bzw. Druckmedium, wie oben beschrieben, mit den spezifischen Formzylindern in Prüflaboren aufgedruckten Farb-Messfelder sind in der Regel rechteckig oder quadratisch. Dabei werden Farbverläufe für jeweils eine der Grundfarben des Druckers in Abstufungen von Bedruckung zu 100% bis 0 % in Stufen von beispielsweise 10% aufgedruckt, deren Farbdichten dann mit einem der beschriebenen Messgeräte spektral bestimmt werden.

Aus dem Stand der Technik sind weiterhin Farbmessungssystem (ACMS™ - Advanced Colour Measurement System) und ein Inline Farbmessungssystem (ICMS™- Inline Colour Measurement System) der Firma ipac bekannt, die zur Farbbeurteilung mehrfarbiger Oberflächen eingesetzt werden. Das System weist jeweils einen spektralen, gegebenenfalls inline angeordneten Scanner auf, der für verschiedene Substrate, also Druckmedien bzw. Materialien (Papier, Folie, Holz, Kunststoff, Keramik, Mineralstoff) und verschiedene Druckverfahren (Digitaldruck, insbesondere Tintenstrahldruck oder Laserdruck, sowie Tiefdruck, Flexodruck, Offsetdruck oder Siebdruck) eingesetzt werden kann. Das ICMS™ und das ACMS™ nutzen eine spektrale ortsaufgelöste Scantechnologie zur Messung eines Druckbildes.

Das spektrale Messsystem ist beispielsweise eine multispektrale Kamera mit einer Mehrzahl von Wellenlängenbändern, vorzugsweise mit 36 Wellenlängenbändern pro aufgenommenem Bildpunkt, die pro Wellenlängenband eine Farbinformation erzeugt. Somit entsteht pro aufgenommenem Bildpunkt (Pixel) ein Farbspektrum aus den Wellenlängenbändern. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera sein, bei der pro Bildpunkt mittels einer optischen Einrichtung, beispielsweise mittels eines Prismas, das Licht spektral aufgespalten und somit einzelne spektrale Bereiche separat gemessen werden. Dadurch erhöht sich die spektrale Auflösung gegenüber einer multispektralen Kamera auf beispielsweise bis zu 350 oder mehr Wellenlängenbänder.

Im Gegensatz zu einer herkömmlichen RGB-Kamera wird somit pro Bildpunkt nicht nur eine Farbe, sondern eine spektrale Verteilung mit erheblich mehr Informationstiefe gewonnen. Ein Vergleich von Bildinformationen aus verschiedenen spektralen Aufnahmen wird dann mittels Software durchgeführt.

Weiterhin kann eine Auflösung des Scanners von mindestens 32 dpi, bevorzugt von mindestens 72 dpi, besonders bevorzugt von mindestens 90 dpi erreicht werden.

Der vorliegenden Erfindung liegt somit das technische Problem zugrunde, das Verfahren zur Prüfung des Farbübertragungsverhaltens von Formzylindern zu verbessern.

Das zuvor aufgeführte technische Problem wird erfindungsgemäß gelöst durch ein Verfahren zur Prüfung des Farbübertragungsverhaltens von Formzylindern gemäß den Merkmalen des Anspruchs 1 mit den nachfolgenden Voraussetzungen und Verfahrensschritten.

Ausgangspunkt für das Verfahren sind das Vorhandensein der digitalen Zylinderdaten in Form von Graustufenbildern für mindestens eine der Druckfarben, vorzugsweise alle Druckfarben. In der Regel verwendet man vier Formzylinder für vier Druckfarben. Die Graustufenbilder der Zylinderdaten sind bevorzugt als 8-bit Graustufenbilder berechnet und gespeichert worden.

Weiterhin ist sind die Daten der verwendeten Gravurkurve vorgegeben. Den der Formzylinder ist unter Anwendung der vorgegebenen Gravurkurve und anhand der digitalen Zylinderdaten graviert worden und weist eine tiefen- und flächenvariable Druckform auf. Die Gravur ist dabei in bekannter Weise in die Oberfläche des Formzylinders eingebracht worden. Die Gravurkurve bestimmt dabei, wie die Intensität, also der Sollwert der Tonstufe, aus dem Graustufenbild der Zylinderdaten in die tatsächliche Tonstufe, gemessen als Farbdichte, übersetzt wird. Die Gravurkurve hat oftmals die Form einer S-Kurve, wobei für niedrige und hohe Tonstufen der Anstieg der Farbdichte kleiner als in einem mittleren Bereich der Tonstufen ist. Die S-Kurve berücksichtigt dabei, dass der Farbverlauf subjektiv besser als bei linearem Verlauf wahrgenommen wird. Insbesondere berücksichtigt die Gravurkurve auch, dass das Druckverhalten viskositätsabhängig ist. So muss bei geringer Tonstufe weniger Druckfarbe aufgebracht werden, um den gewünschten Farbeindruck zu erzeugen. Im Bereich des steilen Abschnittes der S-Kurve ist dann der Effekt maßgeblich, dass die Strukturen der Gravur größer werden und anteilig immer mehr Druckfarbe übertragen wird und die gedruckten Punkte überproportional größer werden.

Weiterhin besteht ein Ausgangspunkt für mindestens eine der Druckfarben, vorzugsweise für alle Druckfarben, darin, dass ein mit einem Formzylinder auf einem Substrat gedruckter Farbauszug vorliegt. Der Farbauszug stellt also für die jeweilige Druckfarbe das Druckbild dar, das die Druckfarbe zum gesamten Druckbild beiträgt und das zu vermessen und zu begutachten ist.

Das erfindungsgemäße Verfahren weist die folgenden Schritte auf:
Für einen unbedruckten Abschnitt des Substrats wird mit einem ortsaufgelösten spektralen Messsystem, vorzugsweise an einer Vielzahl von Messpunkten, eine spektral aufgelöste Referenzreflektanz gemessen. Dazu können die oben beschriebenen Farbmesssystems, insbesondere das ACMS oder ICMS, angewendet werden.

Ebenfalls wird für einen vollbedruckten Abschnitt des Substrates eine spektral aufgelöste Volltonreflektanz gemessen. Die Volltonreflektanz wird für die nachfolgende Bestimmung der Farbtonstufe verwendet.

Des Weiteren wird für die Messpunkte aus dem vollbedruckten Abschnitt aus der spektralen Verteilung der gemessenen Volltonreflektanz, der gemessenen Referenzreflektanz und einer die Druckfarbe repräsentierenden spektralen Gewichtsfunktion eine Volltonfarbdichte für die Druckfarbe berechnet.

Für zumindest einen Abschnitt des gedruckten Farbauszugs wird die spektral aufgelöste Reflektanz mit dem ortsaufgelösten spektralen Messsystem an einer Vielzahl von Messpunkten gemessen. Vorzugsweise wird ein großer Teil oder das gesamte Druckbild des gedruckten Farbauszugs vermessen, um eine möglichst umfassende Beurteilung des Farbauszugs zu erreichen.

Für jeden Messpunkt wird dann aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet.

Aus den digitalen Zylinderdaten wird mindestens ein Farbdichteabschnitt des zu druckenden Farbauszugs ermittelt, in dem innerhalb eines vorgegebenen Wertebereichs, vorzugsweise einen prozentualen Wertebereiches eine gleiche Farbdichte vorliegt. Beispielsweise können in einem Farbauszug drei, auch nicht zusammenhängende Abschnitte bzw. Teilbereiche mit unterschiedlichen Farbdichtebereichen von beispielsweise 0,2, 0,45 und 0,7 mit jeweils einer Bereichsgröße von beispielsweise +/- 0,02 festgelegt werden. Grundsätzlich kann die Bereichsgröße im Bereich von 5 bis 10 % der Farbdichtewerte liegen, was gegebenenfalls eine Bereichsgröße von +/- 5 oder 10% der Tonwerte entspricht.

In einem nächsten Schritt werden die gemessenen Farbdichten zu allen Messpunkten innerhalb des mindestens einen ermittelten Farbdichteabschnitts des Farbauszugs zusammengefasst, so dass aus diesen Farbdichten eine mittlere Farbdichte berechnet werden kann. Die mittlere Farbdichte entspricht dann einem Ist-Wert der Farbdichte, der in einem gesonderten, weiteren Verfahrensschritt mit dem Sollwert aus den Graustufen der entsprechenden Zylinderdaten verglichen werden kann.

Des Weiteren wird die mittlere Farbdichte für die Farbdichteabschnitte des gedruckten Farbauszugs mit der gemessenen und berechneten Volltonfarbdichte verglichen und die Farbtonstufe als prozentualer Wert berechnet. Somit wird aus der gemessenen und gemittelten Farbdichte für den mindestens einen Farbdichteabschnitt ein Ist-Wert der Farbtonstufe bestimmt.

Durch die beschriebenen Verfahrensschritte kann die Prüfung des Formzylinders bzw. dessen Gravur in die Produktion verlagert werden, ohne dass ein Drucken in einem Prüflabor mit speziellen Formzylindern zum Erzeugen vorgegebener Farbdichteabschnitte in Form von Farbkeilen notwendig ist. Dadurch wird die Prüfung aus dem Prüflabor in die Produktion verlagert, was verschiedene Vorteile und Eigenschaften mit sich bringt, die zum Teil mit der Labormethode nicht erreichbar wären.

In einer bevorzugten Ausgestaltung des Verfahrens werden die gemessenen Farbdichten des gedruckten Farbauszugs mit den Zylinderdaten registriert, also ortsaufgelöst bestmöglich in Übereinstimmung miteinander gebracht. Die aus den gemessenen Farbdichten des mindestens einen Farbdichteabschnitts berechneten Ist-Tonwertstufen werden dann mit den aus den digitalen Zylinderdaten berechneten Soll-Tonwertstufen abschnittsweise verglichen und Tonwert-Abweichungen zwischen den Werten berechnet.

Somit kann eine Qualitätskontrolle der Gravur des Formzylinders in der Produktionsanlage durchgeführt werden. Dafür kann vorzugsweise die Genauigkeit der Gravurkurve anhand der Tonwert-Abweichungen beurteilt werden und die Gravurkurve als ausreichend gut beurteilt werden, wenn die Tonwert-Abweichungen ein vorgegebenes Maß nicht überschreiten. Beispielsweise kann das nicht zu überschreitende Maß mit +/- 0,1%, vorzugsweise +/- 0,5%, insbesondere +/- 1% oder +/- 5% angegeben werden. Die anzuwendenden Maße hängen dabei von der Art des Dekors und von den eingesetzten Druckfarben ab und können einzelfallspezifisch bestimmt werden.

Somit kann bei einem neu hergestellten und mit einer Gravur versehenen Formzylinder die Qualität der Gravur mit dem beschriebenen Verfahren analysiert und beurteilt werden. In einem Freigabeprozess kann diese Qualitätskontrolle im Bereich der Produktion anhand des vorhandenen Formzylinders durchgeführt werden.

Darüber hinaus kann im Verlauf des Lebenszyklus eines Formzylinders eine regelmäßige Kontrolle der Qualität des Formzylinders durchgeführt werden, dessen Gravur sich während einer fortlaufenden Benutzung abnutzen kann. Wird das beschriebene Verfahren zu verschiedenen Zeitpunkten durchgeführt, so kann eine Abnutzung der Gravur festgestellt werden und bei einer zu großen Abnutzung, die sich durch eine zu große Abweichung der Ist-Werte von den Soll-Werten ermittelt werden kann, kann ein Austausch des Formzylinders veranlasst werden. Findet eine regelmäßige Überprüfung statt, so kann gegebenenfalls ein in der Zukunft notwendiger Austausch des Formzylinders rechtzeitig bestimmt werden. Ein Austauschformzylinder kann dann rechtzeitig hergestellt werden.

Das zuvor beschriebene Verfahren kann in bevorzugter Weise dadurch weitergebildet werden, dass eine mittlere spektrale Verteilung der gemessenen Reflektanzen für die Farbdichteabschnitte des gedruckten Farbauszugs berechnet wird.

Die gemittelte spektrale Verteilung für die mindestens eine Druckfarbe und für jeden Tonwert kann für das Erstellen einer tonalen Farbdatenbank verwendet werden. Dabei wird wie beschrieben bevorzugt für jede Druckfarbe ein separater Farbauszug gedruckt. Zur Erstellung mehrerer Farbauszüge können auch sukzessiv alle Druckfarben übereinander gedruckt und Differenzen zwischen jeweils zwei aufeinander folgenden Drucken gebildet werden. Daraus können für einzelne Druckfarben ebenfalls einzelne Farbauszüge erstellt werden.

Diese gemittelte spektrale Verteilung kann wiederum in einem späteren Zeitpunkt zur Kontrolle der tonale Farbdatenbank mit dem in der tonalen Datenbank hinterlegten Daten abgeglichen werden. Damit kann beispielsweise eine fortlaufende Aktualisierung der tonalen Datenbank durchgeführt werden.

Des Weiteren kann das Verfahren weiter den Verfahrensschritt aufweisen, dass für mindestens eine Druckfarbe, vorzugsweise für alle Druckfarben, eine oder mehrere, vorzugsweise alle der nachfolgenden Daten in einer Datei für eine tonale Datenbank gespeichert werden:

> die digitalen Zylinderdaten,
> die Gravurkurve,
> die gemessenen Farbdichten,
> die aus den gemessenen Farbdichten berechneten Tonwertstufen,
> die mittlere spektrale Verteilung der gemessenen Reflektanzen,
> die gemessenen Referenzreflektanz,
> die gemessene Volltonreflektanz und/oder
> die die Druckfarbe repräsentierende spektrale Gewichtsfunktion.

Dazu wird bevorzugt der IT8 Standard verwendet und eine IT8-Datei erzeugt. IT8 bezeichnet dabei eine Zusammenfassung mehrerer ANSI-Standards zur Farbkontrolle. Nach diesen Standards werden Scanner, Digitalkameras, Monitore und Drucker kalibriert, um Farbverbindlichkeit gewährleisten zu können. Im Folgenden wird die Erfindung anhand von Ausführungsbeispielen mit Bezug auf die Zeichnung erläutert. In der Zeichnung zeigen

Fig. 1    eine schematische Darstellung einer Rotationstiefdruckmaschine,

Fig. 2    eine schematische Darstellung zur Herstellung eines gravierten Formzylinders,

Fig. 3    ein Ausführungsbeispiel eines spektralen Messsystems zur Durchführung eines erfindungsgemäßen Verfahrens,

Fig. 4    ein Ausführungsbeispiel eines bedruckten Substrates mit einem gedruckten Farbkeil mit einer Mehrzahl von Farb-Messfeldern und einer schematischen Darstellung der Abdeckung der Farb-Messfelder durch die spektrale Messung (a),

Fig. 5    ein Ausführungsbeispiel zur anschaulichen Darstellung der Berechnung des spektralen Reflexionsfaktors ($R_\lambda$) aus der spektralen Reflektanz des Farb-Messfeldes am Beispiel Cyan und der spektralen Reflektanz des unbedruckten Substrates,

Fig. 6    ein Ausführungsbeispiel zur anschaulichen Darstellung der Berechnung der Farbdichte D aus den spektralen Reflexionsfaktors ($R_\lambda$) und dem Gewichtsfaktor ($W_\lambda$),

Fig. 7    eine schematische Darstellung eines Farbauszugs für eine Druckfarbe, Farbdichteabschnitte für drei vorgegebene Farbdichten und eine Gravurkurve,

Fig. 8    eine erste Gravurkurve mit Ist- und Soll-Werten und

Fig. 9    eine zweite Gravurkurve mit Ist- und Soll-Werten.

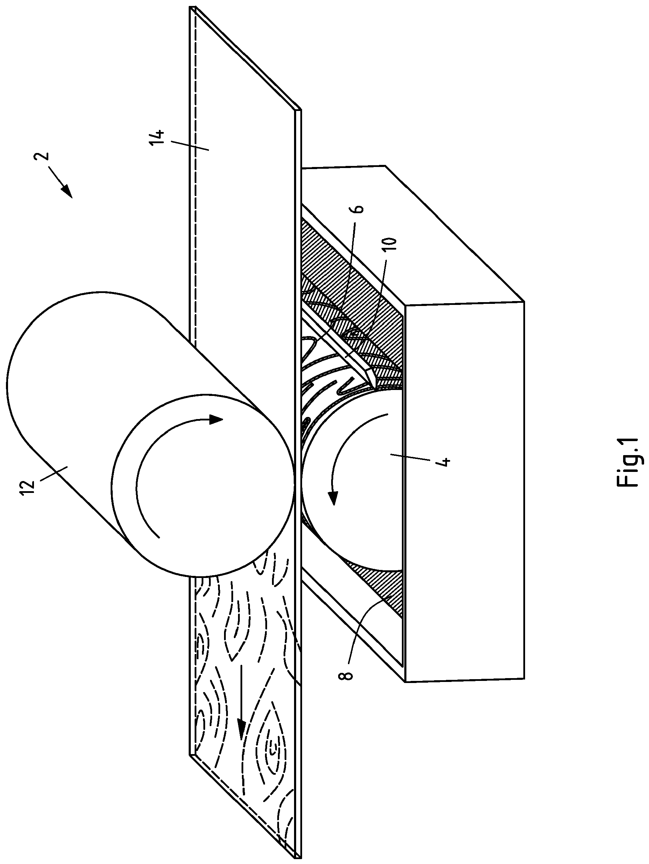

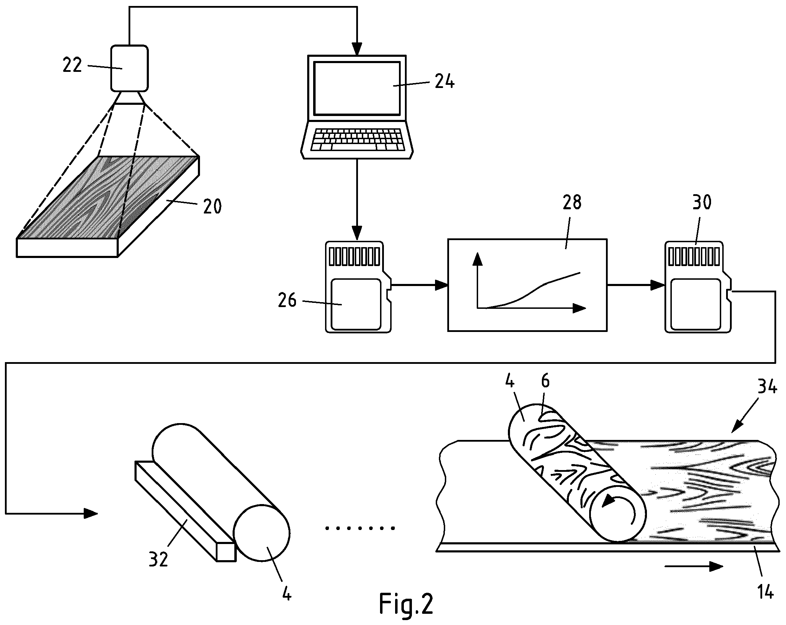

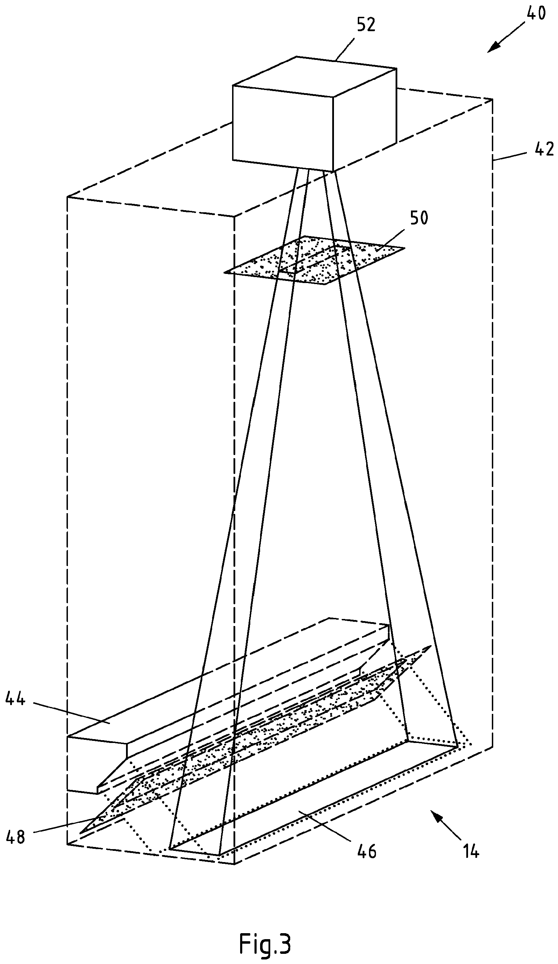

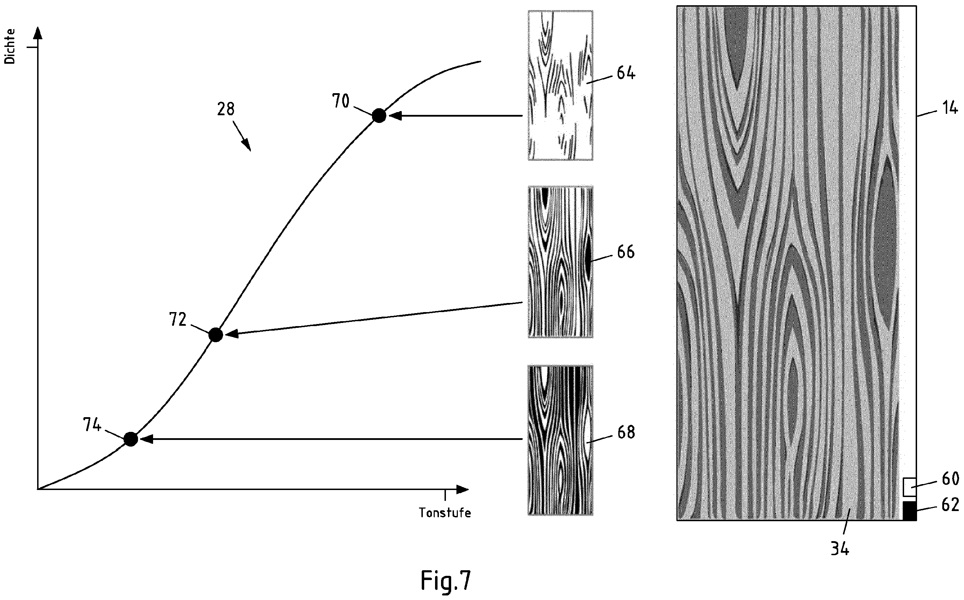

Zunächst wird anhand der Fig. 1 und 2 das Funktionsprinzip einer Rotationstiefdruckmaschine und das Erstellen eines gravierten Formzylinders 2 erläutert. Anschießend wird die Farbdichtemessung anhand der Fig. 3 bis 6 beschrieben, bevor dann anhand der Fig. 7 bis 9 das erfindungsgemäße Verfahren diskutiert wird.

Fig. 1 zeigt schematisch eine Rotationstiefdruckmaschine 2 mit einem Formzylinder 4, der eine Gravur 6 auf der Zylinderoberfläche aufweist. Zum Benetzen mit der Druckfarbe taucht der Formzylinder 4 während der Drehung in einen Farbbehälter 8 ein und die Oberfläche des Formzylinders 4 wird mit der Druckfarbe beschichtet.

Danach wird die überschüssige Druckfarbe mittels eines Rakels 10 abgerakelt wird, so dass die Druckfarbe nur in den Vertiefungen der Gravur 6 verbleibt. Ein Druckzylinder 12 ist oberhalb des Formzylinders 4 angeordnet und durch den Spalt zwischen beiden Zylindern 4 und 12 wird das Substrat 14 in Form einer Papierbahn hindurchgeführt.

Durch den Anpressdruck des Druckzylinders 12 wird die Druckfarbe auf die Unterseite der Papierbahn 14 übertragen und ein Farbauszug für die gewählte Druckfarbe entsteht. Aus Gründen der besseren Darstellung ist das bedruckte Substrat, das sich in Fig. 1 nach links herausbewegt transparent dargestellt, um den entstandenen Druck auf der Unterseite in gestrichelten Linien andeuten zu können.

Fig. 2 zeigt in einer schematischen Darstellung das Erstellen einer Gravur 6 auf der Oberfläche eines Formzylinders 4 und einen damit hergestellten Farbauszug. Gemäß Fig. 2 wird eine Probe 20 mit einer zu reproduzierenden Oberfläche mit Holzmaserung mit einer Kamera 22 aufgenommen und das Bild an einen Computer 24 übertragen. Aus dem Kamerabild wird eine digitale Vorlage als Bilddatei erstellt und die Farbkomponenten, beispielsweise CMYK (C-Cyan, M-Magenta, Y-Yellow, K-Key (schwarz)), zur Herstellung des Bildes im Rotationstiefdruckverfahren werden rechnerisch bestimmt. Für jede der Druckfarben wird daher ein Satz von Zylinderdaten 26, symbolisch dargestellt durch ein Speichermedium, zur Herstellung der Gravur erzeugt. Die Zylinderdaten 26 liegen in Form von 8-bit Graustufenbildern vor.

Für mindestens eine der Druckfarben, vorzugsweise für alle Druckfarben, wird für jeden der Formzylinder 4 eine Gravurkurve aus einer tonalen Datenbank eingelesen, symbolisch durch das Diagramm 28 dargestellt. Dabei bestimmt die Gravurkurve 28 wie die Intensität, also der Sollwert der Tonstufe, aus dem Graustufenbild der Zylinderdaten 26 in die tatsächlich gedruckte Tonstufe gemessen als Farbdichte übersetzt wird. Aus der rechnerischen Kombination der Zylinderdaten und der Gravurkurve werden Gravurdaten 30, symbolisch dargestellt durch ein Speichermedium, berechnet, abgespeichert und auf eine Gravurvorrichtung 32 übertragen.

In der Gravurvorrichtung 32 wird die Oberfläche des Formzylinders 4 anhand der mit den digitalen Zylinderdaten 26 und der Gravurkurve 28 berechneten Gravurdaten graviert. Der Formzylinder 4 stellt daher eine tiefen- und flächenvariable Druckform dar.

In einem nachfolgenden Schritt wird mit dem Formzylinder 4, der für das spätere Drucken des Designs genutzt werden soll, ein Farbauszug 34 für die zugeordnete Druckfarbe auf dem Substrat der Papierbahn 14 gedruckt. Dabei ist im Vergleich zu Fig. 1 eine Ansicht des Substrates von unten gezeigt, um den Farbauszug 34 sichtbar zu machen.

Mit der vorzugsweise aus vier Formzylindern 4 bestehenden Druckform erfolgt dann später der Rotationstiefdruck. Beim 4-Farben-Tiefdruck werden die jeweiligen Farbauszüge übereinander gedruckt und bilden durch subtraktive Farbmischung den finalen Farbeindruck des zu produzierenden Designs oder Dekors.

Mit einer Farbkontrolle bzw. einem Farbmanagement soll beispielsweise beim Einrichten des Druckvorgangs erreicht werden, dass eine Vorlage 20, die mit der Kamera 22 erfasst wurde, mit dem Rotationstiefdruckverfahren möglichst originalgetreu wiedergegeben wird. Dazu werden die nachfolgend anhand der Fig. 3 bis 6 beschriebenen Techniken der spektralen Farbdichtemessung angewendet.

Fig. 3 zeigt ein Ausführungsbeispiel eines spektralen Messsystems 40 zur Durchführung eines erfindungsgemäßen Verfahrens. Das Messsystem 40 weist zunächst ein Gehäuse 42 auf, in dem die Komponenten angeordnet sind. Im Gehäuse 42 ist eine Beleuchtungseinrichtung 44 angeordnet, die einen Scanbereich 46 auf der Oberfläche des Trägermaterials bzw. Substrates 14 beleuchtet. Dabei wird Licht einer genormten Beleuchtungsart, beispielsweise D50, mit einer vorgegebenen spektralen Intensitätsverteilung über den sichtbaren spektralen Bereich von 380 bis 730 nm erzeugt.

Im Strahlengang vor dem Scanbereich ist ein erster Polarisationsfilter 48 angeordnet, der das eintreffende Licht polarisiert, bevor es auf dem Scanbereich 46 auftrifft. Das vom Scanbereich 46 reflektierte Licht verläuft dann in Richtung eines zweiten Polarisationsfilters 50. Der erste Polarisationsfilter 48 lässt von den in allen Richtungen schwingenden Lichtwellen jeweils nur eine Schwingungsrichtung durch. Die durch den ersten Polarisationsfilter 48 ausgerichteten Lichtstrahlen werden von der Farboberfläche im Scanbereich 46 teilweise spiegelnd reflektiert, insbesondere wenn die Oberfläche durch einen kurz zuvor erfolgten Druckprozess noch nass ist, jedenfalls noch nicht ausgetrocknet ist. Bei einer spiegelnden Reflexion ändert sich Schwingungsrichtung des Lichtes nicht. Der zweite Polarisationsfilter 50 ist gegenüber dem ersten Polarisationsfilter um 90° gedreht angeordnet, so dass die vom Scanbereich 46 reflektierten Lichtwellen nicht durchgelassen werden.

Bei einer spektralen Messung von abgetrockneten Farbdrucken können die beschriebenen Polarisationsfilter auch weggelassen werden.

Im Strahlengang hinter dem zweiten Polarisationsfilter 50 ist die Mess- und Auswerteeinrichtung 52 angeordnet. Darin befindet sich eine multispektrale oder hyperspektrale Kamera, mit der für jeden erfassten Bildpunkt des Scanbereichs 46 vorzugsweise in 36 Wellenlängenbändern pro aufgenommenem Bildpunkt eine spektrale Intensitätsverteilung gemessen wird. Somit wird pro Wellenlängenband eine Farbinformation erzeugt, die zusammen ein Spektrum ergeben. Somit entsteht pro aufgenommenem Bildpunkt (Pixel) ein Farbspektrum aus vorzugsweise 36 Wellenlängenbändern. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera aufweisen, die eine gegenüber einer multispektralen Kamera vergrößerte spektrale Auflösung von beispielsweise bis zu 350 oder mehr Wellenlängenbänder pro Messpunkt aufweist. Die spektralen Informationen werden dann bevorzugt innerhalb des spektralen Messsystems mit einer Datenverarbeitung ausgewertet.

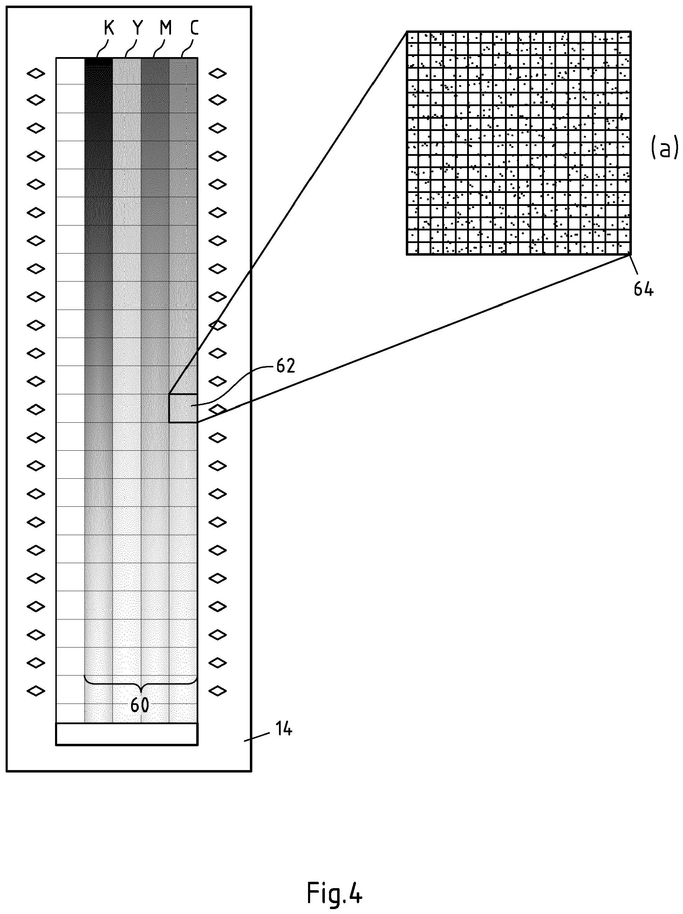

Fig. 4 zeigt einen Ausdruck von Farbkeilen 60 für jede der Druckfarben auf dem Substrat 14, wie sie üblicher Weise für die Kontrolle des Druckverhaltens eines Druckers wie einer Rotationstiefdruckers 2 gedruckt werden. Die Farbkeile 60 weisen für jede Druckfarbe eine Mehrzahl von in ihrer Farbdichte abgestuften Farb-Messfelder 62 aufweisen. Dabei sind Abstufungen in 10%-, 5%- oder 1%-Schritten gebräuchlich, wobei üblicher Weise auch Farb-Messfelder 24 mit Tonwerten von 100% und von 0% enthalten sind.

Das Verfahren zur spektralen Farbdichtemessung im Farbdruck kann dann wie folgt durchgeführt werden.

Zunächst wird für einen unbedruckten Abschnitt des Substrat 14, beispielsweise dem Farb-Messfeld 62 mit einem Tonwert von 0%, mit dem ortsaufgelösten spektralen Messsystem 40 an einer Vielzahl von Messpunkten eine spektral aufgelöste Referenzreflektanz gemessen.

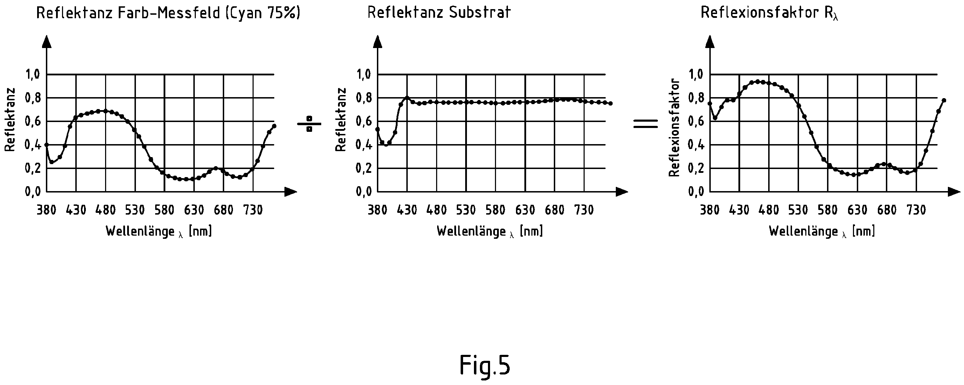

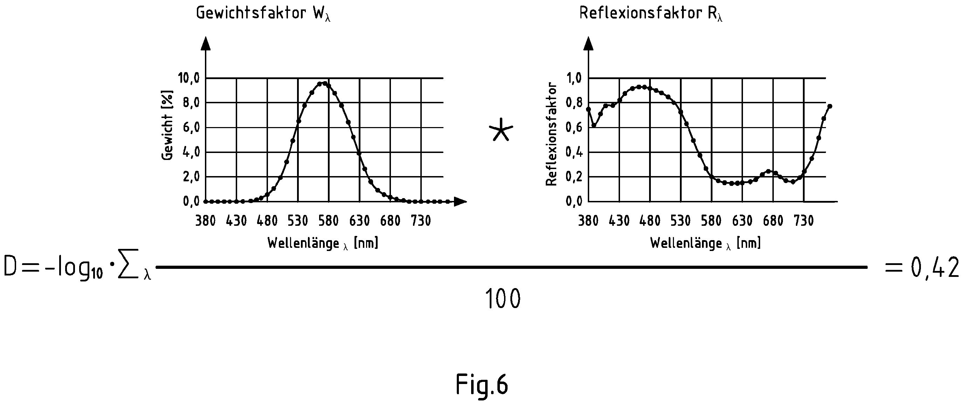

Mit dem spektralen Messsystem 40 werden spektral aufgelöste Reflektanzen für die Farb-Messfelder 62 jeweils an einer Vielzahl von Messpunkten 64 gemessen, wie in Fig. 4 (a) mit einem Strichraster gezeigt ist. Für jeden Messpunkt wird dann aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet. Diese Verfahrensschritte werden anhand der Fig. 5 und 6 näher erläutert.

Durch die Vielzahl von Messpunkten ist ein Abtasten nahezu der gesamten Fläche des Farb-Messfeldes 24 möglich, so dass eine detaillierte Auswertung der aus den Reflektanz-Messkurven erfolgen kann.

Die Fig. 5 und 6 zeigen in einer graphisch aufbereiteten Weise die Anwendung der Berechnung der Farbdichte für ein Farbmessfeld der Grundfarbe Cyan nach der Norm ISO 5.3 gemäß Anlage B und insbesondere gemäß Anlage B.4. Hier wird für Wellenlängenintervalle der Wellenlängenbänder von 10nm oder 20nm spezifiziert, wie die Berechnung der Standard Farbdichte nach der Gleichung B.2 erfolgt:

$$D = -\log\left(\sum_{\lambda} \frac{W_\lambda \times R_\lambda}{100}\right)$$

wobei $W_\lambda$ der spektrale Gewichtsfaktor der Wellenlänge $\lambda$, $R_\lambda$ der spektrale Reflektanzfaktor der Wellenlänge $\lambda$ und 100 die Summe der spektralen Gewichtsfaktoren über den Wellenlängenbereich von 380 nm bis 730 nm ist.

Fig. 5 zeigt zunächst die Berechnung der spektralen Verteilung des Reflektanzfaktors $R_\lambda$ als Quotient aus der spektralen Verteilung der Reflektanz des Farb-Messfeldes und aus der spektralen Verteilung der Reflektanz des unbedruckten Substrates. Dabei werden anstelle der mathematischen Ausdrücke entsprechende Spektren dargestellt. Für gleiche Werte der Wellenlänge $\lambda$ werden dann jeweils die entsprechenden Werte durcheinander geteilt. Als Ergebnis wird eine von der Wellenlänge $\lambda$ abhängige spektrale Verteilung des Reflektanzfaktors $R_\lambda$ berechnet.

Fig. 6 zeigt dann in gleichermaßen anschaulicher Weise, wie die Farbdichte D als negativer Logarithmus zur Basis 10 der Summe über alle Wellenlängen $\lambda$ über die Produkte aus der spektralen Verteilung des Gewichtsfaktors $W_\lambda$ für Cyan und der spektralen Verteilung des Reflektanzfaktors $R_\lambda$ zu jedem Wert von $\lambda$ geteilt durch 100 berechnet wird. In dem dargestellten Beispiel ergibt sich ein Wert für die Farbdichte D von 0,42.

Wie Fig. 4 (a) zeigt, wird das mindestens eine Farb-Messfeld rasterförmig an einer Vielzahl von Messpunkten vermessen. Dabei kann eine Auflösung von mindestens 30 dpi, vorzugsweise von mindestens 70, insbesondere von mindestens 90 dpi erreicht werden. Somit kann die Fläche des Farb-Messfeldes im Wesentlichen ganz, also zu einem großen Prozentsatz von mindestens 80%, vorzugsweise zu mindestens 90%, insbesondere zu mindestens 95% vermessen werden.

Die nach dem beschriebenen Verfahren gemessenen Farbdichten aller Messpunkte innerhalb eines Farb-Messfeldes können in verschiedener Weise ausgewertet werden. Beispielsweise können die Farbdichten für mindestens zwei Messpunkte, vorzugsweise eine Mehrzahl von Messpunkten und insbesondere für alle Messpunkte jedes Farb-Messfeldes gemittelt werden. Somit können Mittelwerte für einzelne Gruppen von Messpunkten oder gar über alle Messpunkte berechnet werden.

Nachfolgend wird anhand der Fig. 7 bis 9 ein Ausführungsbeispiel eines erfindungsgemäßen Verfahrens zur Prüfung des Farbübertragungsverhaltens von Formzylindern 4 erläutert.

Das Verfahren zur Prüfung des Farbübertragungsverhaltens von Formzylindern 4 geht, wie zuvor beschrieben von der Situation aus,

- dass digitale Zylinderdaten 26 in Form von Graustufenbildern für mindestens eine der Druckfarben, vorzugsweise alle Druckfarben, vorgegeben sind,
- dass der Formzylinder unter Anwendung einer vorgegebenen Gravurkurve und anhand der digitalen Zylinderdaten 26 graviert worden ist und
- dass für mindestens eine der Druckfarben, vorzugsweise für alle Druckfarben, ein mit einem Formzylinder auf einem Substrat gedruckter Farbauszug vorliegt.

Das Verfahren weist dann die folgenden Schritte auf, wobei insbesondere auf die Fig. 7 bis 9 Bezug genommen wird:

Mit einem in Fig. 3 dargestellten spektralen Messsystem 40 wird für einen unbedruckten Abschnitt 60 des Substrats bzw. der Papierbahn 14, siehe Fig. 7, an einer Vielzahl von Messpunkten eine spektral aufgelöste Referenzreflektanz gemessen.

Ebenso wird für einen vollbedruckten, also mit maximalem 100% Farbauftrag versehenen Abschnitt 62 des Substrates 14 eine spektral aufgelöste Volltonreflektanz gemessen. Für die Messpunkte wird aus dem vollbedruckten Abschnitt 62 aus der spektralen Verteilung der gemessenen Volltonreflektanz, der gemessenen Referenzreflektanz und einer die Druckfarbe repräsentierenden spektralen Gewichtsfunktion eine Volltonfarbdichte für die Druckfarbe berechnet.

Des weiteren wird für zumindest einen Abschnitt des gedruckten Farbauszugs 34 die spektral aufgelöste Reflektanz mit dem ortsaufgelösten spektralen Messsystem 40 an einer Vielzahl von Messpunkten gemessen. Für jeden Messpunkt wird dann aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet.

Im nächsten Schritt werden aus den digitalen Zylinderdaten 26 drei Farbdichteabschnitte 64, 66 und 68 des zu druckenden Farbauszugs 34 mit innerhalb eines prozentualen Bereiches gleicher Farbdichte ermittelt. Der obere Farbdichteabschnitt 64 stellt die im Farbauszug am dunkelsten gedruckten Abschnitte mit höchster Graustufe dar, dieses sind vor allem die Konturen der dargestellten Maserungen. Der mittlere Farbdichteabschnitt 66 stellt die in mittlerer Graustufe gedruckten Abschnitte der Maserung, in der beispielsweise die Astlöcher dargestellt sind. Der untere Farbdichteabschnitt 68 stellt schließlich die hellsten gedruckten Abschnitte mit niedrigster Graustufe dar, dieses sind vor allem die hellen Abschnitte der dargestellten Maserungen.

Das dargestellte Beispiel stellt eine vereinfachte Variante dar, da nur drei verschiedene Graustufen gewählt wurden, um das Design der Maserung im Farbauszug 34 wiederzugeben. Aber selbst diese drei Graustufen können beim Drucken mit einer Ungenauigkeit versehen sein, so dass es zu Abweichungen von den drei vorgegebenen Graustufenwerten kommt. Daher wird für jeden vorgegebenen Graustufenwert ein Bereich angegeben, der für den Farbdichteabschnitt relevant ist. Hierbei können prozentuale oder auch absolute Wertebereiche angegeben werden. Vorteilhaft ist beispielsweise ein Bereich von +/- 5% der vorgegebenen Farbdichte. Anschließend werden, nachdem die Messdaten des Farbauszugs 34 mit den Zylinderdaten 26 registriert worden sind, die gemessenen Farbdichten zu allen Messpunkten der drei ermittelten Farbdichteabschnitte 64, 66 und 68 des Farbauszugs 34 zusammengefasst, so dass eine mittlere Farbdichte berechnet werden kann.

Danach wird die mittlere Farbdichte für die Farbdichteabschnitte 64, 66 und 68 des gedruckten Farbauszugs 34 mit der zuvor ermittelten Volltonfarbdichte verglichen und die Farbtonstufe wird als prozentualer Wert berechnet.

Somit kann mittels des beschriebenen Verfahrens der Farbauszug sehr genau vermessen werden, so dass die Qualität des Rotationstiefdrucks und insbesondere die Qualität der Gravur des Formzylinders 4 überprüft werden können.

Dazu werden zum Beispiel die gemessenen Farbdichten des gedruckten Farbauszugs 34 mit den Zylinderdaten 26 registriert und die aus den gemessenen Farbdichten der Farbdichteabschnitte 64, 66 und 68 berechneten Ist-Tonwertstufen mit den aus den digitalen Zylinderdaten 26 berechneten Soll-Tonwertstufen abschnittsweise verglichen und Tonwert-Abweichungen zwischen den Werten werden berechnet.

Dieser Vergleich ist in Fig. 7 im linken Teil dargestellt. Die Graphik zeigt den Verlauf der Gravurkurve 28. Für die drei Farbdichteabschnitte 64, 66 und 68 werden die Messpunkte 70, 72 und 74 der gemessenen Farbdichten in Abhängigkeit von der jeweils zugeordneten Tonstufe in dem Diagramm als Punkte eingezeichnet. Mit Pfeilen ausgehend von den Darstellungen 64, 66 und 68 werden die Farbdichteabschnitt 64, 66 und 68 den eingezeichneten Punkten 70, 72 und 74 zugeordnet.

Im dargestellten Vergleich liegen die Punkte 70, 72 und 74 im Rahmen der Messgenauigkeit, die vorliegend über die Fläche der Punkte 70, 72 und 74 symbolisiert ist, auf der Gravurkurve 28. Somit ergibt sich im vorliegenden Fall, dass die Gravur 6 des Formzylinders 4 eine gute Qualität aufweist.

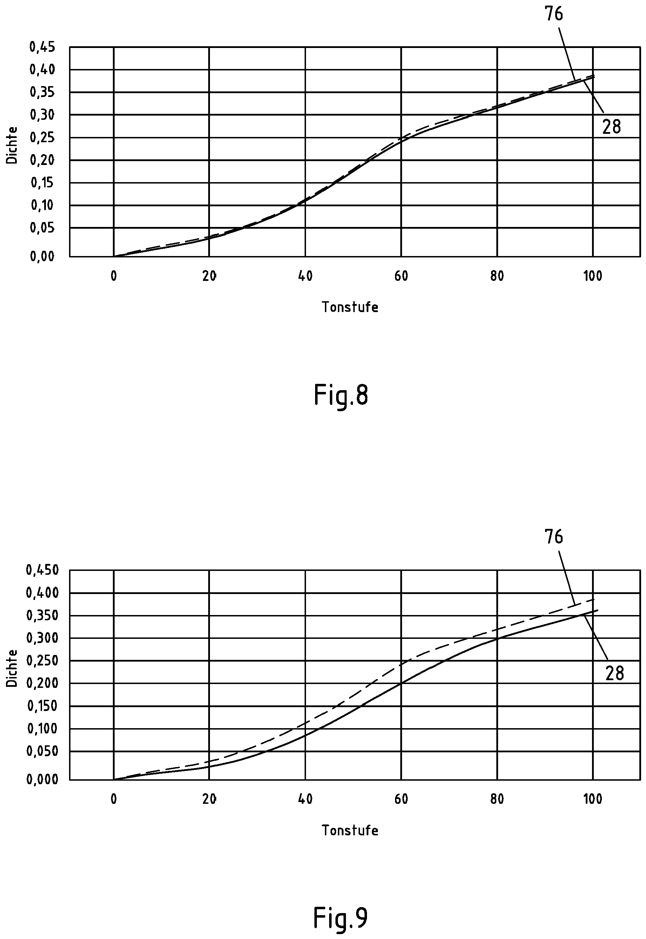

Die Fig. 8 und 9 zeigen zwei Beispiele, in denen mehr als drei Farbdichteabschnitte ausgewertet wurden und in den Diagrammen sind jeweils mit durchgezogenem Strich die Gravurkurve 28 und die sich aus den ermittelten Messdaten ergebende Messkurve 76 mit gestrichelter Linie dargestellt.

Aus Fig. 8 ergibt sich ein nahezu paralleler Verlauf der beiden Kurven 28 und 76 mit geringem Abstand, so dass hier eine gute Qualität des Formzylinders 4 festgestellt werden kann. In Fig. 9 sind die Abstände zwischen den beiden Kurven zum Teil relativ groß, so dass hier nur eine geringe und gegebenenfalls nicht ausreichende Qualität des gravierten Formzylinders vorliegt.

Somit kann die Genauigkeit der Gravurkurve 28 anhand der Tonwert-Abweichungen beurteilt werden und die Gravurkurve 28 kann als ausreichend gut beurteilt werden, wenn die Tonwert-Abweichungen ein vorgegebenes Maß nicht überschreiten. Als Maß kann dabei eine Abweichung um +/- 0,1%, +/- 0,5%, +/-1% oder +/- 5% von den Farbdichtewerten angenommen werden.

In einem weiteren Verfahrensschritt werden die spektralen Messdaten dahingehend ausgewertet, dass jeweils eine mittlere spektrale Verteilung der gemessenen Reflektanzen für die Farbdichteabschnitte 64, 66 und68 des gedruckten Farbauszugs 34 berechnet wird. Diese gemittelten spektralen Verteilung sind charakteristisch für die Druckfarbe und können in die tonale Farbdatenbank übertragen und für spätere Druckprozesse eingesetzt werden. Somit können neue Druckfarben vermessen oder bestehende Druckfarben überprüft und gegebenenfalls aktualisiert werden.

Schließlich kann vorgesehen sein, dass für die Druckfarben, eine oder mehrere, vorzugsweise alle der nachfolgenden Daten in einer Datei für eine tonale Datenbank gespeichert werden:

die digitalen Zylinderdaten 26,
die Gravurkurve 28,
die gemessenen Farbdichten,
die aus den gemessenen Farbdichten berechneten Tonwertstufen,
die mittlere spektrale Verteilung der gemessenen Reflektanzen,
die gemessenen Referenzreflektanz,
die gemessene Volltonreflektanz und/oder
die die Druckfarbe repräsentierende spektrale Gewichtsfunktion.

**Patentansprüche**

1.  Verfahren zur Prüfung des Farbübertragungsverhaltens von Formzylindern,

    - wobei digitale Zylinderdaten in Form von Graustufenbildern für mindestens eine der Druckfarben, vorzugsweise alle Druckfarben, vorgegeben sind,
    - wobei der Formzylinder unter Anwendung einer vorgegebenen Gravurkurve und anhand der digitalen Zylinderdaten graviert worden ist,
    - wobei für mindestens eine der Druckfarben, vorzugsweise für alle Druckfarben, ein mit einem Formzylinder auf einem Substrat gedruckter Farbauszug vorliegt,
    - bei dem für einen unbedruckten Abschnitt des Substrat mit einem ortsaufgelösten spektralen Messsystem, vorzugsweise an einer Vielzahl von Messpunkten, eine spektral aufgelöste Referenzreflektanz gemessen wird,
    - bei dem für einen vollbedruckten Abschnitt des Substrates eine spektral aufgelöste Volltonreflektanz gemessen wird,
    - bei dem für die Messpunkte aus dem vollbedruckten Abschnitt aus der spektralen Verteilung der gemessenen Volltonreflektanz, der gemessenen Referenzreflektanz und einer die Druckfarbe repräsentierenden spektralen Gewichtsfunktion eine Volltonfarbdichte für die Druckfarbe berechnet wird,
    - bei dem für zumindest einen Abschnitt des gedruckten Farbauszugs die spektral aufgelöste Reflektanz mit dem ortsaufgelösten spektralen Messsystem an einer Vielzahl von Messpunkten gemessen wird,
    - bei dem für jeden Messpunkt aus der spektralen Verteilung der gemessenen Reflektanz, der gemessenen Referenzreflektanz und einer die Druckfarbe repräsentierenden spektralen Gewichtsfunktion eine Farbdichte für die Druckfarbe berechnet wird,
    - bei dem aus den digitalen Zylinderdaten mindestens ein Farbdichteabschnitt des zu druckenden Farbauszugs mit innerhalb eines prozentualen Bereiches gleicher Farbdichte ermittelt wird,
    - bei dem die gemessenen Farbdichten zu allen Messpunkten innerhalb des mindestens einen ermittelten Farbdichteabschnitts des Farbauszugs zusammengefasst werden und eine mittlere Farbdichte berechnet wird,
    - bei dem die mittlere Farbdichte für die Farbdichteabschnitte des gedruckten Farbauszugs mit der Volltonfarbdichte verglichen und die Farbtonstufe als prozentualer Wert berechnet wird.

2.  Verfahren nach Anspruch 1,

    - bei dem die gemessenen Farbdichten des gedruckten Farbauszugs mit den Zylinderdaten registriert werden und
    - bei dem die aus den gemessenen Farbdichten des mindestens einen Farbdichteabschnitts berechneten Ist-Tonwertstufen mit den aus den digitalen Zylinderdaten berechneten Soll-Tonwertstufen verglichen und Tonwert-Abweichungen zwischen den Werten berechnet werden.

3.  Verfahren nach Anspruch 2,

    - bei dem die Genauigkeit der Gravurkurve anhand der Tonwert-Abweichungen beurteilt wird und
    - bei dem die Gravurkurve als ausreichend gut beurteilt wird, wenn die Tonwert-Abweichungen ein vorgegebenes Maß nicht überschreiten.

4.  Verfahren nach einem der Ansprüche 1 bis 3, bei dem eine mittlere spektrale Verteilung der gemessenen Reflektanzen für die Farbdichteabschnitte des gedruckten Farbauszugs berechnet wird.

5.  Verfahren nach einem der Ansprüche 1 bis 4, bei dem für mindestens eine Druckfarbe, vorzugsweise für alle Druckfarben, eine oder mehrere, vorzugsweise alle der nachfolgenden Daten in einer Datei für eine tonale Datenbank gespeichert werden:

    die digitalen Zylinderdaten,
    die Gravurkurve,
    die gemessenen Farbdichten,
    die aus den gemessenen Farbdichten berechneten Tonwertstufen,
    die mittlere spektrale Verteilung der gemessenen Reflektanzen,
    die gemessenen Referenzreflektanz,
    die gemessene Volltonreflektanz und/oder
    die die Druckfarbe repräsentierende spektrale Gewichtsfunktion.

Fig.1

EP 4 311 673 A1

Fig.2

12

Fig.3

Fig.4

Reflektanz Farb-Messfeld (Cyan 75%)　　　Reflektanz Substrat　　　Reflexionsfaktor $R_\lambda$

Fig.5

EP 4 311 673 A1

EP 4 311 673 A1

Gewichtsfaktor $W_\lambda$

Reflexionsfaktor $R_\lambda$

Gewicht [%]

Wellenlänge $_\lambda$ [nm]

Reflexionsfaktor

Wellenlänge $_\lambda$ [nm]

$$D = -\log_{10} \cdot \sum_\lambda \frac{\phantom{xxxxxxxxxxxxxxxxxxxxxxxxxxxxxxxxxxxxxxxxxx}}{100} = 0{,}42$$

Fig.6

Fig.7

EP 4 311 673 A1

Fig.8

Fig.9

Europäisches
Patentamt

European
Patent Office

Office européen
des brevets

## EUROPÄISCHER RECHERCHENBERICHT

**Nummer der Anmeldung**

**EP 22 18 7795**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/156299 A1 (MARTINEZ HENRY [US] ET AL) 21. August 2003 (2003-08-21) * Absatz [0071] – Absatz [0160]; Ansprüche 1-25; Abbildungen 1-25 * * Absatz [0218] – Absatz [0319] * ----- | 1-5 | INV. B41F33/00 G01J3/46 H04N1/60 B41F9/02 B41F9/06 |
| A | DE 10 2010 052075 A1 (ROTOCROM IND E COM LTDA [BR]) 26. Mai 2011 (2011-05-26) * Absatz [0054] – Absatz [0078]; Ansprüche 1-10; Abbildungen 3-9 * ----- | 1-5 | |
| A | US 2009/220751 A1 (WARNER ALRICK VINCENT [US] ET AL) 3. September 2009 (2009-09-03) * Absatz [0021] – Absatz [0116]; Anspruch 121 * ----- | 1-5 | |

**RECHERCHIERTE SACHGEBIETE (IPC)**

B41F
G01J
H04N

Der vorliegende Recherchenbericht wurde für alle Patentansprüche erstellt

| Recherchenort | Abschlußdatum der Recherche | Prüfer |
|---|---|---|
| München | 17. Januar 2023 | Durucan, Emrullah |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 7795

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2023

| Im Recherchenbericht angeführtes Patentdokument | Datum der Veröffentlichung | Mitglied(er) der Patentfamilie | | Datum der Veröffentlichung |
|---|---|---|---|---|
| US 2003156299 A1 | 21-08-2003 | BR | 0211123 A | 26-10-2004 |
| | | CA | 2452539 A1 | 13-02-2003 |
| | | CN | 1537055 A | 13-10-2004 |
| | | EP | 1412187 A1 | 28-04-2004 |
| | | JP | 2004536730 A | 09-12-2004 |
| | | MX | PA04000988 A | 17-02-2005 |
| | | US | 2003156299 A1 | 21-08-2003 |
| | | WO | 03011598 A1 | 13-02-2003 |
| DE 102010052075 A1 | 26-05-2011 | BR | PI0904702 A2 | 05-07-2011 |
| | | DE | 102010052075 A1 | 26-05-2011 |
| | | IT | 1403749 B1 | 31-10-2013 |
| US 2009220751 A1 | 03-09-2009 | BR | PI0907966 A2 | 24-09-2019 |
| | | CA | 2716453 A1 | 03-09-2009 |
| | | CN | 101959978 A | 26-01-2011 |
| | | EP | 2247674 A1 | 10-11-2010 |
| | | JP | 5595934 B2 | 24-09-2014 |
| | | JP | 2011513049 A | 28-04-2011 |
| | | US | 2009220751 A1 | 03-09-2009 |
| | | US | 2012232509 A1 | 13-09-2012 |
| | | US | 2014309608 A1 | 16-10-2014 |
| | | US | 2016166446 A1 | 16-06-2016 |
| | | US | 2017348164 A1 | 07-12-2017 |
| | | WO | 2009107083 A1 | 03-09-2009 |

EPO FORM P0461

Für nähere Einzelheiten zu diesem Anhang : siehe Amtsblatt des Europäischen Patentamts, Nr.12/82